(19) Europäisches Patentamt
European Patent Office
Office européen des brevets

(11) Publication number: **0 057 490**
**B1**

(12) **EUROPEAN PATENT SPECIFICATION**

(45) Date of publication of patent specification: **17.10.84**

(51) Int. Cl.$^3$: **A 01 K 1/00**

(21) Application number: **82200138.4**

(22) Date of filing: **04.02.82**

(54) **Fencing for laterally partitioning a cubicle having an entrance side, in particular for cattle.**

(30) Priority: **04.02.81 NL 8100537**

(43) Date of publication of application:
**11.08.82 Bulletin 82/32**

(45) Publication of the grant of the patent:
**17.10.84 Bulletin 84/42**

(84) Designated Contracting States:
**BE DE FR GB NL**

(56) References cited:
**DE-A-2 923 384**
**US-A-1 485 356**

**PRICELIST: "50 jaar Brouwers", May 1969 Zeichnung 7914-4-4 der Fa. L.S. Brouwers Stalinrichtingen B.V. at Leeuwarden (Opstelling Ligboxafscheiding model 8530), Baubrief Echern, Ausgabe 1975, Heft 17, Seite 48**

(73) Proprietor: **L.S. Brouwers Stalinrichtingen B.V.**
**Marshallweg 3- en 7 P.O. Box 203**
**NL-8912 AC Leeuwarden (NL)**

(72) Inventor: **Brouwers, Simon Johannes**
**P.J. Troelstraweg 51**
**NL-8916 CM Leeuwarden (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

**EP 0 057 490 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a fencing for laterally partitioning a cubicle having an entrance side for in particular cattle, comprising an assembly of a front support leg facing towards the entrance side of the cubicle and a rear bush facing away from the entrance side of the cubicle, as well as a tube bent to a frame of an elongate shape, the ends of said tube being adapted for insertion in the bushes.

A fencing of such a type as specified in the prior art portion of claim 1 is generally known and is marketed by L. S. Brouwers Stalinrichtingen B.V. at Leeuwarden as model no. 8530. The shape of the frame portion of the prior art assembly can be described as being based on a rectangle of unequal sides as basic form the large sides of which during the erection of the fencing are practically substantially horizontal, on the understanding that the lower large side is not completely formed, but the tube portion constituting said large side, as viewed from the small sides of the rectangle, is bent downwardly to two supporting legs which are inserted with the ends thereof in the respective bushes, said bushes being connected to a baseplate anchorable to the bottom.

The location of the supporting legs is substantially closer to the rearmost small side, i.e. the small side of the frame facing away from the entrance side of the cubicle.

Both bushes connected to the top of the baseplate are designed as clamping bushes vertical in practice during erection of the fencing, in which bushes the frame with the end of the supporting legs is admitted and clamped. Consequently in this method of attachment the clamping bushes each have a function blocking the movement of the frame both in vertical and in horizontal direction.

For forming the cubicle separations, a number of the fencings corresponding with the number of cubicle separations to be formed, is arranged parallel to each other and the position thereof on the floor is fixed by anchoring the baseplate onto the floor. The thus arranged fencings are subsequently interconnected in lateral direction by installing a rod serving as so-called shoulder bar over the top of the cubicle separations, connecting same by means of pipe clamps to the top of the frame. Likewise the rearmost small sides of the frames of the erected fencings are analogously interconnected by means of pipe clamps through a rod serving as so-called nose bar. The shoulder bar and nose bar in lateral direction impart strength to the formed cubicle separation construction besides their function to guiding the cow entering the cubicle, to occupying a place for properly lying in the proper position.

The above mentioned placing of the supporting legs results in that the front frame portion facing towards the entrance side of the cubicle is not supported along a substantial distance and so that the corresponding part thereof in lateral direction contains less obstacles, with the result that the cow present in the cubicle is less likely to be injured. It should be noted that the cow in the cubicle lies with her tail in the direction of the entrance side of the cubicle separation, while as is well known, the cow barrel broadens in the same direction. Less obstacles in lateral direction in that part of the cubicle separation in general means more space of movement, hence more comfort and reduced risk of injury to the cow, which is an advantage of this type of fencing. On the other hand, however, it has been found that in practice, under influence of the often uncontrolled lateral movements of the cow, the non-supported portion of the frame, depending on the clamping force exerted substantially by the front clamping bush, results more or less easily in lateral bending of the frame along a bending line extending from the attachment place of the shoulder bar at the top large side of the frame over the front supporting leg approximately in inclined downward direction. It is the object of the invention to provide a fencing of the above mentioned type, however, providing greater resistance to lateral bending of the frame under influence of a load exerted in that direction by displacement of the bending line.

This object is fulfilled by the features of claim 1.

According to the invention the fencing is designed for that purpose in such a way that the tube from which the front bush is made, in erected position of the fencing, is bent in a direction facing towards the entrance side of the cubicle through an angle sufficiently blocking against vertical displacement of the frame to be admitted therein with the corresponding end, the rear bush being a substantially vertical tube stub.

In the floor of a stall mostly consisting of concrete the front and rear tube in situ where the fencing has to be erected can be cast in the floor at an effective interspace and thus be secured, while the frame with the ends thereof are admitted in the bushes. With a view to the maintenance of an accurate, reproducible distance between the front and the rear bush, it is recommendable that the position of the two bushes is fixed relative to each other in the factory. To this effect, the fencing is preferably designed in such a way that the front and the rear bush are connected to the top of a baseplate to be positioned on the bottom and having an underside, while the distance between the inlet side of the front and the rear bush deviates sufficiently from the distance between the frame ends in order that the frame against its own resilience, with the ends thereof can be admitted in the corresponding front, respectively rear bush.

It is surprising that without application of a clamped joint, such as clamping bushes, there is nevertheless obtained with the fencing according to the invention such a rigid construction that at otherwise analogous design of the frame, and with application of the same type of tube material, it is possible to obtain a double resistance against lateral bending of the frame portion of the fencing designed according to the invention. This reinforcement of the fencing according to the invention moreover can be obtained through application of a heavier construction material in only the portion of the fencing according to the invention corresponding with the supporting leg portion, i.e. the front bush. True, it can be expected that in the above mentioned known embodiment of the fencing, through application of a heavier material, in general a corresponding reinforced construction can be obtained, but in that case the entire frame should necessarily be designed in the heavier material. Indirectly this naturally means loss of material, thus affecting the economy of the fencing.

As regards its preferred embodiment, a major advantage of the fencing according to the invention is furthermore that it can be delivered by the manufacturer in an entirely assembled condition, so that the user, for attachment of the fencing on the contemplated location, need only apply a number of anchoring bolts in the floor, after which the fencing need be secured only by means of nuts. Use can likewise be made of a galvanised tube. Another advantage is that in case of fracture or wear, replacement or repair can also be performed better and more economically since the fencing consists of two removable portions.

Preferably, the two bushes are welded onto the baseplate. As a result that a minimal amount of projections is present adjacent the floor and as a result that a minimal amount of possibilities of dirt accumulation, e.g. dung, which enhances the hygienic conditions.

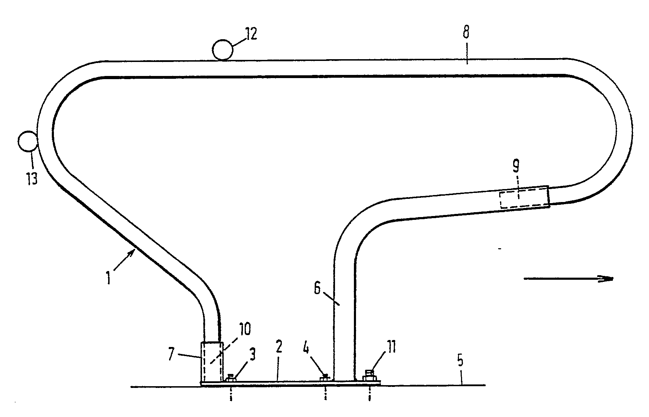

One embodiment of the fencing according to the invention in sideview will now be explained, by way of example, with reference to the accompanying drawing. At 1 is shown the fencing serving as cubicle separation. The front bush 6 and the rear bush 7 are welded onto the baseplate 2. By inserting the end 9 of the frame 8 in the front bush 6, the frame 8 is blocked against displacement in vertical direction. By subsequently moving the end 10 against the resilience of the frame in upward direction and in the direction of the front bush 6, the end 10 can be admitted in the rear bush 7, so that the frame 8 is likewise blocked against displacement in horizontal direction. The tension of the entire assembly ensures sufficient strength of the fencing construction. The whole can now be secured by means of the anchoring bolts 3, 4, 11 on the stall floor 5.

Within the space destined for the purpose, such as in the stall, the cubicles are arranged by positioning a number of the fencings or separations as shown in the drawing, in parallel relationship to each other. At the left-hand side thereof in the drawing, a wall or fencing construction is provided shutting off that side, as is known per se. In the drawing the arrow indicates at what side of the cubicle the entrance thereto is present.

By 12 is diagrammatically shown the shoulder bar and by 13 the nose bar, each being suitably connected to the frame, e.g. by means of pipe clamps.

Naturally, modifications can be applied in the cubicle separation discussed in the above and shown in the drawing without departing from the scope of the invention. For instance it is possible to design the rear bush 7 as clamping bush. It is also possible for instance to extend the end portions of the bushes 6 and 7 through the baseplate 2 at the underside thereof over a sufficient distance. By means of these end portions of the bushes extended at the underside of the baseplace, and by casting same in the concrete foundation, it is possible to secure the assembly of baseplate and both bushes in the floor without using anchoring bolts.

**Claims**

1. A lateral cubicle fencing (1), in particular for cattle, having a front side serving to limit an entrance, and comprising a vertical rear bush (7), a tubular front supporting means (6) of constant diameter whose lower end is substantially vertical, and a tube of a smaller constant diameter bent into a frame (8) having a long side which, in use, is uppermost and horizontal and having end portions (9, 10) which are bent inwardly and inserted, in use, in the rear bush (7) and the front support leg means (6), characterised in that the front support leg means (6) is bent such that its upper end portion extends forwardly through an angle that is sufficient for blocking against vertical displacement of the frame (8).

2. A fencing (1) according to claim 1, wherein the rear bush (7) and the front support leg means (6) are mounted on a baseplate (2) whose underside is, in use, in contact with the floor (5), and wherein the distance between the upper ends of the rear bush (7) and the front support leg means (6) is greater than that between the ends (9, 10) of the frame (8) such that the frame is held in the rear bush (7) and the front support leg means (6) against its own resilience.

**Patentansprüche**

1. Seitliche Kabineneinzäunung, im besonderen für Rinder, deren Stirnseite zur Begrenzung eines Eingangs dient, bestehend aus einer vertikalen hinteren Steckbuchse, einem rohrförmigen vorderen Stützfuß von konstantem Durchmesser, dessen unteres Ende im wesentlichen vertikal ausgerichtet ist und aus einem Rohr von geringerem konstanten Durchmesser, das zu einer Einfassung gebogen ist, die eine lange Seite besitzt, welche bei ihrer Verwendung zu oberst und horizontal angeordnet ist und die Endabschnitte besitzt, die nach innen gegoben und bei Verwendung in die Steckbuche und den vorderen Stützfuß eingesetzt sind, dadurch gekennzeichnet daß der vordere Stützfuß (6) derart gebogen ist, daß sein oberer Endabschnitt sich in einem Winkel nach vorne erstreckt, der dazu ausreicht, eine Versetzung oder Einfassung (8) in vertikaler Richtung zu verhindern.

2. Seitliche Kabineinzäunung nach Anspruch 1, dadurch gekennzeichnet, daß die hintere Steckbuchse (7) und der vordere Stützfuß (6) an einer Grundplatte (2) befestigt sind, deren Unterseite sich bei Anwendung in Kontakt mit dem Boden (5) befinden und daß der Abstand zwischen den oberen Enden der hinteren Steckbuchse (7) und des vorderen Stützfußes (6) größer ist also der zwischen den Enden (9, 10) der Einfassung (8), so daß die Einfassung (8) in der Steckbuchse (7) und im vorderen Stützfuß (6), gegen ihre eigene Rückfederung festegehalten wird.

**Revendications**

1. Barrière latérale (1) de boxes, en particulier pour du bétail, ayant une côté avant servant d'entrée et comportant un manchon arrière vertical (7), un pied support tubulaire avant (6) de diamètre constant, dont l'extrémité inférieure est pratiquement verticale, et un tube de plus petit diamètre constant coudé en un cadre (8) ayant un grand côté qui, en service, se trouve en haut et horizontal, et des portions terminales (9, 10), qui sont coudées vers l'intérieur et introduites, et service, dans le manchon arrière (7) et dans le pied support avant (6), caractérisée en ce que le pied support avant (6) est coudé de telle sorte que sa portion terminale supérieure s'étende vers l'avant en faisant un angle suffisant pour empêcher tout déplacement vertical du cadre (8).

2. Barrière (1) selon la revendication 1, dans laquelle le manchon avant (7) et le pied support arrière (6) sont montés sur une plaque de base (2) dont la surface inférieure est, en service, en contact avec le plancher (5), et dans laquelle la distance entre les extrémités supérieures du manchon arrière (7) et du pied support avant (6) est supérieure à la distance entre les extrémités (9, 10) du cadre (8) de telle sorte que ce cadre est maintenu dans le manchon arrière (7) et dans le pied support avant (6) grâce à sa propre élasticité.

12
8
13
9
1
6
10
7
3
2
4
11
5